# EUROPEAN PATENT SPECIFICATION

(11) **EP 1 597 968 B1**
(45) Date of publication and mention of the grant of the patent: **28.05.2008**
(21) Application number: 05017652.8
(22) Date of filing: 17.12.1999
(51) Int. Cl.: A01N 3/02, A01N 33/26, A01N 27/00

(54) **Complexes and delivery methods for the safe and convenient storage, transport and application of compounds for inhibiting the ethylene response in plants**
Komplexe und Abgabeverfahren zur sicheren und bequemen Lagerung, Transport und Anwendung von Verbindungen zur Hemmung der Ethylen-Antwort von Pflanzen
Complexes et procédés d'administration destinés au stockage, au transport et à l'application, par des moyens surs et pratiques, de composés destinés à inhiber la réponse à l'éthylène des plantes

(43) Date of publication of application: 23.11.2005
(62) Divisional of application: 99965034.4
(73) Proprietor: Agrofresh, Inc., Philadelphia PA 19106-2399 (US)
(72) Inventor: Daly, James, Savannah Georgia 31401 (US); Kourelis, Bob, Chicago Illinois 60647 (US)
(74) Representative: Kent, Venetia Katherine

(56) References cited:
- WO-A-00/10386
- US-A- 5 518 988
- SISLER E C ET AL: "Inhibitors of ethylene responses in plants at the receptor level: Recent developments" BIOSIS, 1997, XP002185866

## Description

Field of the Invention: The present invention generally relates to the regulation of plant physiology, in particular to methods for inhibiting the ethylene response in plants or plant products, in order to prolong their shelf life. The invention relates to prolonging the shelf life of cut flowers and ornamentals, potted plants (edible and non-edilile), transplants, and plant foods including fruits, vegetables and root crops.

The present invention in its various aspects is set out in the accompanying claims.

The present invention has two embodiments.

The first embodiment of the present invention relates to complexes formed from molecular encapsulation agents, such as cyclodextrin, and cyclopropene or its derivatives, such as methylcyclopropene, in addition to complexes formed from molecular encapsulation agents and cyclopentadiene or diazocyclopentadiene or their derivatives. These molecular encapsulation agent complexes provide a convenient and safe means for storing and transporting the compounds capable of inhibiting the ethylene response in plants. These molecular encapsulation agent complexes are important because the compounds capable of inhibiting the ethylene response in plants are reactive gases and therefore highly unstable because of oxidation and other potential reactions.

The second embodiment relates to convenient methods of delivering to plants the compounds capable of inhibiting their ethylene responses in order to extend shelf life. These methods involve contacting the molecular encapsulation agent complex with a solvent capable of dissolving the molecular encapsulation agent, thereby liberating the compound capable of inhibiting the ethylene response so it can contact the plant.

### BACKGROUND OF THE INVENTION

The present invention generally relates to the regulation of plant growth and to methods of inhibiting ethylene responses in plants by application of cyclopropene, cyclopentadiene, diazocyclopentadiene or their derivatives. The present invention specifically relates to methods of synthesis and molecular encapsulation agent complexes, in addition to storage, transport and application of these gases that inhibit ethylene responses in plants.

Plant growth responses are affected by both internal and external factors. Internal control of plant processes are under the influence of genetic expression of the biological clocks of the plant. These processes influence both the extent and timing of growth processes. Such responses are mediated by signals of various types which are transmitted within and between cells. Intracellular communication in plants typically occurs via hormones (or chemical messengers) as well as other less understood processes.

Because communications in a plant are typically mediated by plant hormones, both the presence and levels of such hormones are important to specific plant cell reactions. The plant hormone that is most relevant to the present invention is ethylene, which has the capacity to affect many important aspects of plant growth, development and senescence. The most important effects of ethylene include processes normally associated with senescence, particularly fruit ripening, flower fading and leaf abscission.

It is well known that ethylene can cause the premature death of plants including flowers, leaves, fruits and vegetables. It can also promote leaf yellowing and stunted growth as well as premature fruit, flower and leaf drop.

Because of these ethylene-induced problems, very active and intense research presently concerns the investigation of ways to prevent or reduce the deleterious effects of ethylene on plants.

One major type of treatment used to mitigate the effects of ethylene employs ethylene synthesis inhibitors. These ethylene synthesis inhibitors reduce the quantity of ethylene that a plant can produce. Specifically, these ethylene synthesis inhibitors inhibit pyridoxal phosphate-mediated reactions and thereby prevent the transformation of S-adenosynlmethione to 1-amino cyclopropane-1-carboxylic acid, the precursor to ethylene. Staby et al. ("Efficacies of Commercial Anti-ethylene Products for Fresh Cut Flowers", Hort Technology, pp. 199-202, 1993) discuss the limitations of these ethylene synthesis inhibitors. Because ethylene synthesis inhibitors only inhibit a treated plant's production of ethylene, they do not suppress the negative effects of ethylene from environmental sources. These environment sources of ethylene exist because ethylene is also produced by other crops, truck exhaust, ethylene gasing units and other sources, all of which can affect a plant during production, shipment, distribution and end use. Because of this, ethylene synthesis inhibitors are less effective than products that thwart a plant's ethylene responses. For a discussion of the ethylene response in plants, see U.S. Patent No. 3,879,188.

The other major type of treatment used to mitigate the effects of ethylene employs blocking the receptor site that signals ethylene action. One of the best known compounds for inhibiting the ethylene response in plants, as well as preventing the deleterious effects from environmental sources of ethylene, is silver thiosulfate ("STS"). An example of a commercial STS product is SILFLOR solution, available from Floralife, Inc., Burr Ridge, Illinois. STS is very effective in inhibiting the ethylene response in plants and has been used because it moves easily in the plant and is not toxic to plants in its effective concentration range. STS can be used by growers, retailers and wholesalers as a liquid that is absorbed into the stems of the flowers. While STS is highly effective, it has a serious waste disposal problem. It is illegal to dispose of the silver component of STS by conventional means, such as by using a laboratory sink, without first pretreating the STS to remove the silver. It is also illegal to spray STS on potted plants. Consequently because of this disposal problem which is typically ignored by growers, STS is now almost exclusively utilized only by growers. Therefore, there is a great desire among postharvest physiologists to find alternatives to STS. To the knowledge of the present inventors, the only commercially acceptable replacements for STS are cyclopropene, cyclopentadiene, diazocyclopentadiene and their derivatives.

Many compounds such as carbon dioxide which block the action of ethylene diffuse from the ethylene receptor or binding site over a period of a few hours. Sisler & Wood, Plant Growth Reg. 7, 181-191, 1988. While these compounds may be used to inhibit the action of ethylene, their effect is reversible and therefore they must be exposed to the plant in a continuous manner if the ethylene inhibition effect is to last for more than a few hours. Therefore, an effective agent for inhibiting the ethylene response in plants should provide an irreversible blocking of the ethylene binding sites and thereby allow treatments to be of short duration.

An example of an irreversible ethylene inhibiting agent is disclosed in U.S. Patent No. 5,100,462. However, the diazocyclopentadiene described in that patent is unstable and has a strong odor. Sisler et al., Plant Growth Reg. 9, 157-164, 1990, showed in a preliminary study that cyclopentadiene was an effective blocking agent for ethylene binding. However, the cyclopentadiene described in that reference is also unstable and has a strong odor.

U.S. Patent No. 5,518,988 discloses the use of cyclopropene and its derivatives, including methylcyclopropene, as effective blocking agents for ethylene binding. Although the compounds in this patent do not suffer from the odor problems of diazocyclopentadiene and cyclopentadiene, because they contain a carbene group, they are relatively unstable due to their potential for undergoing oxidation and other reactions. Therefore, a problem of stability of these gases, as well as the explosive hazards these gases present when compressed, exist.

WO 00/10386 discloses a method of inhibiting the ethylene response in a plant or plant product comprising the steps of contacting the plant or plant product with a composition comprising encapsulated cyclopropene cyclopentadiene or diazocyclopentadiene derivatives.

To solve these problems, the present invention provides a method of incorporating these gaseous compounds, which inhibit the ethylene response in plants, in a molecular encapsulation agent complex in order to stabilize their reactivity and thereby provide a convenient and safe means of storing, transporting and applying or delivering the active compounds to plants. The application or delivery methods of these active compounds can be accomplished by simply adding water to the molecular encapsulation agent complex.

In trying to implement the teaching of U.S. Patents No. 5,518,988, the problems associated with the stability of the gases and the potential explosive hazard of using compressed gases limit their use and therefore their effectiveness. To solve those problems, the present inventors developed a molecular encapsulation agent complex that stabilizes the reactivity of these gases and thereby provides a convenient and safe means of storing, transporting and applying or delivering these gases to plants.

This approach is an important advance over the art as it allows for the convenient and safe storage, transport and use of gases that are otherwise difficult to store, ship and dispense. The present invention will now allow for the safe, convenient and consistent use of these gases in the field by the grower, in addition to their use in distribution and in the retail marketplace. In fact, a complex of methylcyclopropene and the molecular encapsulating agent cyclodextrin allows for a product having a shelf life of greater than one year.

Another feature of the molecular encapsulation agents of the present invention is that once they trap the gaseous active agent in the complex, the complex (and -hence the gaseous active agent) does not exhibit a very high vapor pressure and is therefore protected from oxidation and other chemical degradation reactions. A gaseous active compound such as cyclopropene or derivatives thereof is held in a caged molecule whereby the vapor pressure of the solid is very low due to the weak atomic forces (van de Waals and hydrogen binding). The binding of these gaseous active compounds with these molecular encapsulation agents holds the active compound until ready for use.

The present invention also prolongs the life of plants by providing an effective and proper dose of the encapsulated active compound capable of inhibiting the ethylene response, which is subsequently desorbed into a gas form for administration to the plant. The invention further embodies the release of the desired active compound from the complex by dissolving the complex in a suitable solvent in order to release the gaseous active compound, thereby serving as an improved gaseous plant treatment.

A major advantage of the present invention is that it provides an effective, user-friendly product for non-technical customers, florists and wholesalers. In addition, the molecular encapsulation agent complex acts as a controlled release agent for treatment with such active gaseous compounds as cyclopropene and methylcyclopropene. As a result, the present invention promotes less human exposure to the target compound than other means of application. Additionally, the user has more control over the application of the gaseous active compound because the active gaseous compound is slowly released from the complex in the presence of a suitable solvent.

Another advantage of the present invention is the amount of selective inclusion of the gaseous active compounds such as cyclopropene into the molecular encapsulation agent. Using the teachings of the present invention, significant quantities of methylcyclopropene and other active compounds can now be encapsulated into a molecular encapsulation agent such as cyclodextrin, far exceeding the normal expected amount usually found with other solids.

A still further advantage of the present invention over the use of compressed concentrated gases is the elimination of the need for gas tanks, regulators, and OSHA compliance for pressurized gas tanks. This results in a substantial cost savings for the manufacturer as well as the customer. In addition, it eliminates the explosive and flammable potential associated with the use of gas tanks holding a highly reactive organic molecule. Moreover, the present invention eliminates the self polymerization and decomposition of gases that occur with compressed gases or liquids containing them.

Another advantage of the present invention over other inert solid carrier systems proposed for use in applying cyclopropene, such as dust, talc, silica and flour, is that it provides a product containing the active gaseous compound with increased stability. For example, the molecular encapsulation agent cyclodextrin protects the active cyclopropene or methylcyclopropene molecule from external conditions, such as ultraviolet degradation, which are problematic in photosensitive compounds such as these.

A still further advantage of the present invention is that the molecular encapsulation agent complex results in more effective use of the active gaseous compound. For example, a reduced quantity of cyclopropene can be utilized to obtain an effective treatment compared with the use of prior proposed cyclopropene solid carriers or compressed gases. This results in less waste and less packaging needed for the commercial product.

Additional features and advantages of the present invention are described in, and will be apparent from, the detailed description and examples provided.

### SUMMARY OF THE INVENTION

In one of the molecular encapsulation agent complex embodiments, which is generically referred to as the cyclopropene molecular encapsulation agent complex, the complex is formed from a molecular encapsulation agent and a compound having the following structure 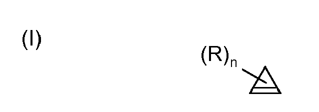 wherein n is a number from 1 to 10 and R is selected from the group consisting of hydrogen, saturated or unsaturated C1 to C10 alkyl, hydroxy, halogen, C1 to C10 alkoxy, amino and carboxy <15a>. The preferred molecular encapsulation agents for use in this cyclopropene molecular encapsulation agent complex embodiment include a cyclodextrin, a crown ether, a polyoxyalkylene, a prophorine, a polysiloxane, a phopnazene and a zeolite. Cyclodextrin and in particular alpha-cyclodextrin are particularly preferred. provided that the compound is not a compound wherein n is a number from 1 to 4 and R is only selected from the group consisting of hydrogen, saturated or unsaturated C₁ to C₄ alkyl, hydroxy, halogen, C₁ to C₄ alkoxy, amino and carboxy.

In another molecular encapsulation agent complex embodiment, which is generically referred to as the cyclopentadiene molecular encapsulation agent complex, the complex is formed from a molecular encapsulation agent and a compound having the following structure 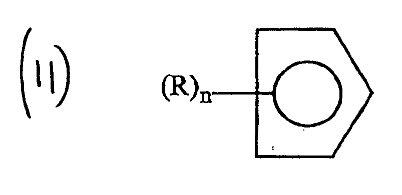 wherein n is a number from 1 to 10 and R is selected from the group consisting of hydrogen, saturated or unsaturated C1 to C10 alkyl, hydroxy, halogen, C1 to C10 alkoxy, amino and carboxy (15a). The preferred molecular encapsulation agents for use in this cyclopentadiene molecular encapsulation agent complex embodiment include a cyclodextrin, a crown ether, a polyoxyalkylene, a; porphorine, a polysiloxane, a phosphazene and a zeolite. Cyclodextrin and in particular alpha-cyclodextrin are particularly preferred.

In still another molecular encapsulation agent complex embodiment, which is generically referred to as the diazocyclopentadiene molecular encapsulation agent complex, the complex is formed from a molecular encapsulation agent and a compound having the following structure 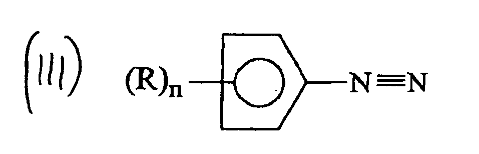 wherein n is a number from 1 to 10 and R is selected from the group consisting of hydrogen, saturated -or unsaturated C1 to C10 alkyl, hydroxy, halogen, C1 to C10 alkoxy, amino and carboxy <15a>. The preferred molecular encapsulation agents for use in this diazocyclopentadiene molecular encapsulation agent complex embodiment include a cyclodextrin, a crown ether, a polyoxyalkylene, a porphorine, a polysiloxane, a phosphazene and a zeolite. Cyclodextrin and in particular alpha-cyclodextrin are particularly preferred.

In one of the method of delivery of a compound to a plant to inhibit an ethylene response in the plant embodiments, which is generically referred to as the cyclopropene method of delivery, the method comprises the step of contacting a complex formed from a molecular encapsulation agent and a compound having the following structure 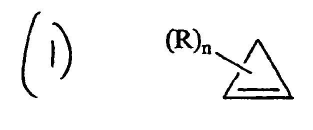 wherein n is a number from 1 to 10 and R is selected from the group consisting of hydrogen, saturated or unsaturated C1 to C10 alkyl, hydroxy, halogen, C1 to C10 alkoxy, amino and carboxy <15a>, with a solvent capable of dissolving the molecular encapsulation agent, and thereby liberating the compound from the molecular encapsulation agent so that it can contact the plant. The preferred molecular encapsulation agents for use in this cyclopropene method of delivery embodiment include a cyclodextrin, a crown ether, a polyoxyalkylene, a porphorine, a polysiloxane, a phosphazene and a zeolite. Cyclodextrin and in particular alpha-cyclodextrin are particularly preferred. The preferred solvent for use in this cyclopropene method of delivery embodiment is water, and the water may additionally comprise an acidic or alkaline agent. A more specific feature of this cyclopropene method of delivery embodiment comprises bubbling a gas through the solvent while it is in contact with the complex. In addition, another specific feature of this cyclopropene method of delivery embodiment comprises applying heat to the solvent either before it contacts the complex or during that contact.

In another method of delivery embodiment, which is generically referred to as the cyclopentadiene method of delivery, the method comprises the step of contacting a complex formed from a molecular encapsulation agent and a compound having the following structure 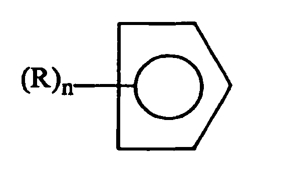 wherein n is a number from 1 to 10 and R is selected from the group consisting of hydrogen, saturated or unsaturated C1 to C10 alkyl, hydroxy, halogen, C1 to C10 alkoxy, amino and carboxy <15a> with a solvent capable of dissolving the molecular encapsulation agent, and thereby liberating the compound from the molecular encapsulation agent so that it can contact the plant. The preferred molecular encapsulation agents for use in this cyclopentadiene method of delivery embodiment include a cyclodextrin, a crown ether, a polyoxyalkylene, a porphorine, a polysiloxane, a phosphazene and a zeolite. Cyclodextrin and in particular alpha-cyclodextrin are particularly preferred. The preferred solvent for use in this cyclopentadiene method of delivery embodiment is water, and the water may additionally comprise an acidic or alkaline agent. A more specific feature of this cyclopentadiene method of delivery embodiment comprises bubbling a gas through the solvent while it is in contact with the complex. In addition, another specific feature of this cyclopentadiene method of delivery embodiment comprises applying heat to the solvent either before it contacts the complex or during that contact:

In still another method of delivery embodiment, which is generically referred to as the diazocyclopentadiene method of delivery, the method comprises the step of contacting a complex formed from a molecular encapsulation agent and a compound having the following structure 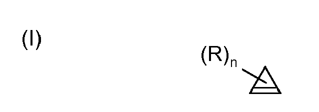 wherein n is a number from 1 to 10 and R is selected from the group consisting of hydrogen, saturated or unsaturated C1 to C10 alkyl, hydroxy, halogen, C1 to C10 alkoxy, amino and carboxy <15a>, with a solvent capable of dissolving the molecular encapsulation agent, and thereby liberating the compound from the molecular encapsulation agent so that it can contact the plant. The preferred molecular encapsulation agents for use in this diazocyclopentadiene method of delivery embodiment include a cyclodextrin, a crown ether, a polyoxyalkylene, a porphorine, a polysiloxane, a phosphazene and a zeolite. Cyclodextrin and in particular alpha-cyclodextrin are particularly preferred. The preferred solvent for use in this diazocyclopentadiene method of delivery embodiment is water, and the water may additionally comprise an acidic or alkaline agent. A more specific feature of this diazocyclopentadiene method of delivery embodiment comprises bubbling a gas through the solvent while it is in contact with the complex. In addition, another specific feature of this diazocyclopentadiene method of delivery embodiment comprises applying heat to the solvent either before it contacts the complex or during that contact.

### DETAILED DESCRIPTION OF THE INVENTION

### The Compounds that Inhibit Plant Ethylene Responses

The compounds that inhibit ethylene responses in plants are disclosed in the following references.

U.S. Patent No. 5,100,462 discloses that diazocyclopentadiene and its derivatives are effective blocking agents that inhibit the ethylene response in plants. Sisler et al., Plant Growth Reg. 9, 157-164, 1990, discloses that cyclopentadiene was an effective blocking agent for inhibiting the ethylene response in plants. U.S. Patent No. 5,518,988 discloses that cyclopropene and its derivatives, including methylcyclopropene, are effective blocking agents for inhibiting the ethylene response in plants.

The derivatives of cyclopropene, cyclopentadiene and diazocyclopentadiene may contain from 1 to 4 R groups. The number of such R groups is more preferably 2 and most preferably 1. As previously mentioned, suitable R groups include hydrogen, saturated or unsaturated C1 to C10 alkyl; hydroxy, halogen, C1 to C10 alkoxy, amino and carboxy.

The term "alkyl" is defined herein to refer to linear or branched, saturated or unsaturated alkyl groups. Examples include but are not limited to methyl, ethyl, propyl, isopropyl and butyl. Alkyl groups of the present invention are most preferably single carbon or linear.

### The Molecular Encapsulation Agent Complex

As previously explained, forming a complex from the molecular encapsulation agent and the gaseous compound capable of inhibiting the ethylene response in plants is important for two reasons. First, strained carbenes are quite unstable to reaction with oxygen, self polymerization and reaction with other organic compounds. The complexes of the present invention overcome those instability problems. Second, it is preferable to use a product that has a long shelf life, is simple to handle and comparatively non-reactive. The complexes of the present invention meet those objectives as well.

A molecular encapsulation agent is a compound that has a lock and key structure similar to an enzyme whereby a substrate selectively fits into the encapsulation site.

The most preferred molecular encapsulation agent found to date is alpha-cyclodextrin. Other molecular encapsulation agents, such as crown ethers, polyoxyalkylenes, porphorines, polysiloxanes, phosphazenes and zeolites, were also found to work. Most of these molecular encapsulation agents can be obtained from the Aldrich Chemical Company.

The method of delivery of the present invention provides a user-friendly application. It also promotes a lower initial dose of active compound and a decrease in the need for repeated applications as compared with previously proposed solid carrier systems.

A variety of molecular encapsulation agents may be utilized in the present invention provided they have the correct cage structure to form a molecular trap for the compound capable of inhibiting the ethylene response in plants. Thus, as one skilled in the art would recognize, the use of other molecular encapsulation agents falls within the spirit and scope of the present invention.

Cyclodextrins, also known as "Schardinger Dextrins", are cyclic oligosaccharides composed of glucose units bonded together by alpha 1,4 bonds. The six-membered ring structure is named alpha-cyclodextrin, the seven membered ring is beta-cyclodextrin and the eight membered ring is gamma-cyclodextrin. Generally, compounds that are encapsulated fit inside of the oligosaccharide ring.

As is well known, cyclodextrins are produced from starch of any selected plant variety such as corn, potato, waxy maize and the like. The starch may be modified or unmodified starch derived from cereal or tuber origin and the amylose or amylopectin fractions thereof. The selected starch in aqueous slurry at selected concentration up to about 35% by weight solids is usually liquefied as by gelatinization or treatment with liquefying enzyme such as bacterial alpha-amylase enzymes and then subjected to treatment with -- a cyclodextrin glucosyl transferase enzyme to form the cyclodextrin.

The amount of the individual alpha, beta and gamma cyclodextrins produced by treating the starch with the glucosyl transferase enzyme will vary depending on the selected starch, selected glucosyl transferace enzyme and processing conditions. The parameters to select for glucosyl transferase enzyme conversion for the desired result in the amount of each individual cyclodextrin to be produced is conventional and well described in the literature. Separation and purification of the cyclodextrin thus obtained is also conventional and well known to those of skill in the art.

In one embodiment, the cyclodextrin utilized in the complex of the present invention is alpha-cyclodextrin. However, as one skilled in the art will appreciate, any cyclodextrin or mixture of cyclodextrins, cyclodextrin polymers as well as modified cyclodextrins can also be utilized pursuant to the present invention. Cyclodextrins are available from American Maize Products Company, Hammond, Indiana, as well as other vendors.

In order to form a molecular encapsulation agent complex, the active compound and the molecular encapsulation agent molecules are mixed together in a solution for a period of time sufficient to form the complex. The complex is then removed from the solution and dried. The dried complex is then ready for use.

As noted previously, the resulting complex of the present invention provides a number of advantages to manufacturers as well as ultimate consumers. Due to the ability of the cyclodextrin to entrap a large amount of cyclopropene, the present invention should lower the initial dosage of cyclopropene needed for treatment as compared with previously proposed solid carriers. Likewise, it should decease the need for repeated treatments of cyclopropene compared with previously proposed solid carriers. The potential of these advantages is demonstrated in the examples below which show the unexpected ability of the complex of the present invention to entrap large quantities of cyclopropene.

The present invention also provides a convenient product for commercial use. For example, select quantities of the complex of the present invention can be sealed into a package for retail and wholesale use. In one embodiment, the preferable package is made of polyvinyl alcohol. The inventors have discovered that polyvinyl alcohol increases the efficiency of release, reduces any exposure, and insures proper dosage. When the consumer is ready to use the complex, the consumer may either dissolve the powder in an aqueous solution (e.g., water) and expose the resulting solution to the plant.

### The Controlled Release of Compounds Capable of Inhibiting the Ethylene Response in Plants

Controlled release of methylcyclopropene as well as other compounds capable of inhibiting the ethylene response in plants from a molecular encapsulation agent complex such as cyclodextrin is facilitated by the addition of an excess of water. Addition of an acid or alkaline substance to the water also facilitates a faster release of the active compound. Heating the water also facilitates a faster release of the active compound.

### The Plants Applicable to the Present Invention

The term "plant" is used generically in the present invention to also include woody-stemmed plants in addition to field crops, potted plants, cut flowers, harvested fruits and vegetables and ornamentals. Some of the plants that can be treated by the methods of the present invention are listed below.

Plants treated by the compounds of the present invention that inhibit the ethylene response need to be treated at levels that are below phytotoxic levels. This phytotoxic level varies not only by plant but also by cultivar.

When correctly used, the compounds of the present invention prevent numerous ethylene effects, many of which have been disclosed in U.S. Patent Nos. 5,518,988 and 3,879,188. The present invention can be employed to combat numerous plant ethylene responses. Ethylene responses may be initiated by either exogenous or endogenous sources of ethylene. Ethylene responses include, for example, (i) the ripening and/or senescence of flowers, fruits and vegetables, (ii) the abscission of foliage, flowers and fruit, (iii) the prolongation of the life of ornamentals, such as potted plants, cut flowers, shrubbery and dormant seedlings, (iv) the inhibition of growth in some plants such as the pea plant, and (v) the stimulation of plant growth in some plants such as the rice plant.

Vegetables which may be treated by the methods of the present invention to inhibit senescence include leafy green vegetables such as lettuce (e.g., *Lactuea sativa*), spinach (*Spinaca oleracea)* and cabbage *(Brassica oleracea*; various roots such as potatoes (*Solanum tuberosum),* carrots (*Daucus*); bulbs such as onions (Allium sp.); herbs such as basil (*Ocimum basilicum*), oregano (*Origanum vulgare)* and dill (*Anethum graveolens*) *;* as well as soybean *(Glycine max*), lima beans *(Phaseolus limensis*), peas (*Lathyrus sp.*), corn (*Zea mays),* broccoli *(Brassica oleracea italica*), cauliflower (*Brassica oleracea botrytis*) and asparagus *(Asparagus officinalis*).

Fruits which may be treated by the methods of the present invention to inhibit ripening include tomatoes *(Lycopersicon esculentum*), apples *(Malus domes tica*), bananas *(Musa sapientum),* pears *(Pyrus communis),* papaya *(Carica papya),* mangoes *(Mangifera indica*)*,* peaches *(Prunus persica),* apricots (*prunus armeniaca*)*,* nectarines (*Prunus persica nectarina*), oranges *(Citrus* sp.), lemons *(Citrus limonia),* limes *(Citrus aurantifolia*)*,* grapefruit *(Citrus paradisi*), tangerines *(Citrus nobilis deliciosa*), kiwi (*Actinidia*. *chinenus*), melons such as cantaloupes *(C. cantalupensis)* and musk melons *(C. melo),* pineapples *(Aranae comosus*), persimmon *(Diospyros* sp.) and raspberries (e.g., *Fragaria or Rubus ursinus*), blueberries (*Vaccinium* sp.), green beans *(Phaseolus vulgaris),* members of the genus Cucumis such as cucumber (*C. sativus*) and avocados *(Persea americana*).

Ornamental plants which may be treated by the methods of the present invention to inhibit senescence and/or to prolong flower life and appearance (such as the delay of wilting), include potted ornamentals and cut flowers. Potted ornamentals and cut flowers which may be treated with the methods of the present invention include azalea (Rhododendron spp.), hydrangea *(Macrophylla hydrangea),* hibiscus *(Hibiscus rosasanensis),* snapdragons (*Antirrhinum* sp.), poinsettia (*Euphorbia pulcherima*)*,* cactus (e.g., *Cactaceae schlumbergera truncata*), begonias *(Begonia* sp.), roses *(Rosa* sp.), tulips *(Tulipa* sp.), daffodils *(Narcissus* sp.), petunias *(Petunia hybrida*)*,* carnation *(Dianthus caryophyllus),* lily (e.g., *Lilium* sp.), gladiolus (*Gladiolus* sp.), Alstroemeria (*Alstroemaria brasiliensis*)*,* anemone (e.g., *Anemone bland*)*,* columbine (*Aquilegia* sp.), aralia (e.g., *Aralia chinesis*), aster (e.g., *Aster carolinianus),* bougainvillea (*Bougainvillea* sp.), camellia (*Camellia* sp.), bellflower (*Campanula* sp.), cockscomb (*Celosia* sp.), falsecypress (*Chamaecyparis* sp.), chrysanthemum (*Chrysanthemum* sp.), clematis (*Clematis* sp.), cyclamen (*Cyclamen* sp.), freesia. (e.g., *Freesia refracta),* and orchids of the family *Orchidaceae.*

Plants-which may be treated by the methods of the present invention to inhibit abscission of foliage, flowers and fruit include cotton *(Gossypium* spp.), apples, pears, cherries (*Prunus avium*), pecans (*Carva illinoensis*), grapes (*Vitis vinifera*), olives (e.g., *Olea europaea*), coffee (*Cofffea arabica*), snapbeans (*Phaseolus vulgaris),* and weeping fig *(Ficus benjamina*), as well as dormant seedlings such as various fruit trees including apple, ornamental plants, shrubbery, and tree seedlings.

In addition, shrubbery which may be treated according to the present invention to inhibit abscission of foliage include privet *(Ligustrum* ap.), photinea *(Photina* sp.), holly (*Ilex* sp.), ferns of the family Polypodiaceae, schefflera *(Schefflera* sp.), aglaonema *(Aglaonema* sp.), cotoneaster (*Cotoneaster* sp.), barberry (*Berberris* sp.), waxmyrtle (*Myrica* sp.), abelia (*Abelia* sp.), acacia (*Acacia* sp.), and bromeliades of the family *Bromeliaceae.*

## Claims

1. A complex formed from a molecular encapsulation agent and a compound having the following structure 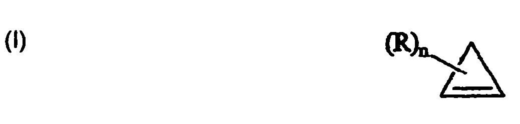 or 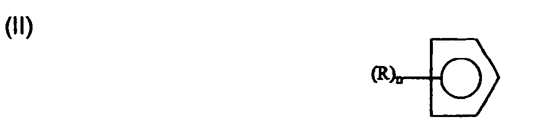 or 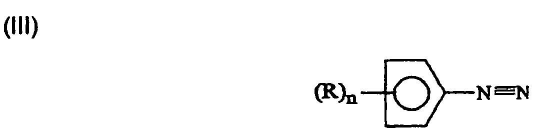 wherein n is a number from 1 to 10 and R is selected from the group consisting of hydrogen, saturated or unsaturated C₁ to C₁₀ alkyl, hydroxy, halogen, C₁ to C₁₀ alkoxy, amino and carboxy;
provided that the compound of formula (I), (II) and (III) is not a compound
wherein n is a number from 1 to 4 and R is only selected from the group consisting of hydrogen, saturated or unsaturated C₁ to C₄ alkyl, hydroxy, halogen, C₁ to C₄ alkoxy, amino and carboxy.

2. The complex of claim 1 wherein the molecular encapsulation agent is selected from the group consisting of a cyclodextrin, a crown ether, a polyoxyalkylene, a porphorine, a polysiloxane, a phosphazene and a zeolite.

3. The complex of claim 2, wherein the molecular encapsulation agent is cyclodextrin.

4. The complex of claim 3 wherein the cyclodextrin is alpha -cyclodextrin.

5. A method of delivering a compound to a plant or plant product to inhibit an ethylene response in the plant or plant product, the method comprising the step of contacting a complex according to any one of the preceding claims, with a solvent capable of dissolving the molecular encapsulation agent, and thereby liberating the compound from the molecular encapsulation agent so that it can contact the plant or plant product.

6. The method of claim 5 wherein the solvent comprises water.

7. The method of claim 6 wherein the water additionally comprises an acidic or alkaline agent.

8. The method claimed in any one of claims 5 to 7 further comprising bubbling a gas through the solvent while it is in contact with the complex.

9. The method claimed in any one of claims 5 to 8 further comprising applying heat to the solvent either before it contacts the complex or during that contact.

## Patentansprüche

1. Komplex, gebildet aus einem molekularen Einkapselungsmittel und einer Verbindung mit der folgenden Struktur 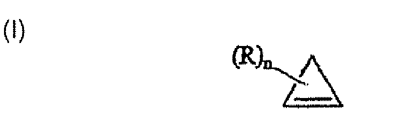 oder 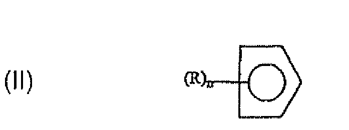 oder 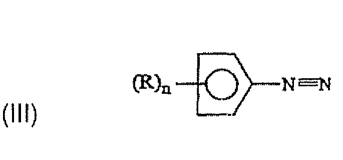 worin n eine Zahl von 1 bis 10 ist und R aus der Gruppe, bestehend aus Wasserstoff, gesättigtem oder ungesättigtem C₁ bis C₁₀-Alkyl, Hydroxy, Halogen, C₁ bis C₁₀-Alkoxy, Amino und Carboxy, ausgewählt ist, mit der Maßgabe, daß die Verbindung der Formel (I), (II) und (III) nicht eine Verbindung ist, worin n eine Zahl von 1 bis 4 ist, und R nur aus der Gruppe, bestehend aus Wasserstoff, gesättigtem oder ungesättigtem C₁ bis C₄-Alkyl, Hydroxy, Halogen, C₁ bis C₄-Alkoxy, Amino und Carboxy, ausgewählt ist.

2. Komplex gemäß Anspruch 1, wobei das molekulare Einkapselungsmittel aus der Gruppe, bestehend aus einem Cyclodextrin, einem Kronenether, einem Polyoxyalkylen, einem Porphyrin, einem Polysiloxan, einem Phosphazen und einem Zeolithen, ausgewählt ist.

3. Komplex gemäß Anspruch 2, wobei das molekulare Einkapselungsmittel Cyclodextrin ist.

4. Komplex gemäß Anspruch 3, wobei das Cyclodextrin alpha-Cyclodextrin ist.

5. Verfahren zum Verabreichen einer Pflanze oder einem Pflanzenprodukt eine Verbindung zum Inhibieren einer Ethylen-Response in der Pflanze oder dem Pflanzenprodukt, wobei das Verfahren den Schritt des Inkantaktbringens eines Komplexes gemäß einem der vorhergehenden Ansprüche mit einem Lösungsmittel, das befähigt ist, das molekulare Einkapselungsmittel zu lösen und **dadurch** das Freisetzen der Verbindung aus dem molekularen Einkapselungsmittel derart, daß sie die Pflanze oder das Pflanzenprodukt kontaktieren kann, umfaßt.

6. Verfahren gemäß Anspruch 5, wobei das Lösungsmittel Wasser umfaßt.

7. Verfahren gemäß Anspruch 6, wobei das Wasser zusätzlich ein saures oder alkalisches Mittel umfaßt.

8. Verfahren gemäß einem der Ansprüche 5 bis 7, weiter umfassend das Blasen eines Gases durch das Lösungsmittel, während es in Kontakt mit dem Komplex ist,

9. Verfahren gemäß einem der Ansprüche 5 bis 8, weiter umfassend das Anlegen von Wärme an das Lösungsmittel, entweder bevor es den Komplex kontaktiert oder während des Kontakts,

## Revendications

1. Complexe formé à partir d'un agent d'encapsulation moléculaire et d'un composé ayant la structure suivante : 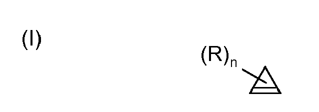 ou 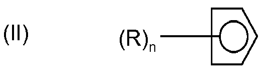 ou 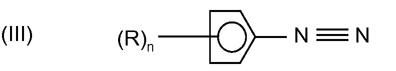 où n est un nombre de 1 à 10 et R est choisi dans le groupe consistant en l'hydrogène, C₁ à C₁₀ alkyle saturé ou insaturé, hydroxy, halogène, C₁ à C₁₀ alcoxy, amino et carboxy ;
à condition que le composé des formules (I), (II) et (III) ne soit pas un composé dans lequel n est un nombre de 1 à 4 et R est seulement choisi dans le groupe consistant en l'hydrogène, C₁ à C₄ alkyle saturé ou insaturé, hydroxy, halogène, C₁ à C₄ alcoxy, amino et carboxy.

2. Complexe selon la revendication 1, où l'agent d'encapsulation moléculaire est choisi dans le groupe consistant en une cyclodexxtrine, un éther couronne, un polyoxyalkylène, une porphorine, un polysiloxane, un phosphazène et une zéolite.

3. Complexe selon la revendication 2, où l'agent d'encapsulation moléculaire est une cyclodextrine.

4. Complexe selon la revendication 3, où la cyclodextrine est l'alpha-cyclodextrine.

5. Procédé de délivrance d'un composé à végétal ou un produit végétal pour inhiber une réponse à l'éthylène dans le végétal ou le produit végétal, le procédé comprenant l'étape de mise en contact d'un complexe selon l'une quelconque des revendications précédentes avec un solvant capable de dissoudre l'agent d'encapsulation moléculaire, et de libérer ainsi le composé de l'agent d'encapsulation moléculaire de sorte qu'il peut entrer en contact avec le végétal ou le produit végétal.

6. Procédé selon la revendication 5, où le solvant comprend de l'eau.

7. Procédé selon la revendication 6, où l'eau comprend en outre un agent acide ou alcalin.

8. Procédé selon l'une quelconque des revendications 5 à 7, comprenant en outre le barbotage d'un gaz dans le solvant tandis qu'il est en contact avec le complexe.

9. Procédé selon l'une quelconque des revendications 5 à 8, comprenant en outre l'application de chaleur au solvant avant qu'il entre en contact avec le complexe ou pendant ce contact.
